# EUROPEAN PATENT SPECIFICATION

(11) **EP 3 593 554 B1**
(45) Date of publication and mention of the grant of the patent: **19.05.2021**
(21) Application number: 18708150.0
(22) Date of filing: 08.03.2018
(51) Int. Cl.: H04W 12/06, H04W 12/00

(54) **METHOD, SYSTEM AND APPARATUSES FOR ANTICIPATING SETUP OF TRUST RELATIONSHIP BETWEEN FIRST CENTRAL VEHICLE AND SECOND VEHICLE**
VERFAHREN, SYSTEM UND VORRICHTUNGEN ZUM VORWEGNEHMEN DES AUFBAUS EINER VERTRAUENSBEZIEHUNG ZWISCHEN EINEM ERSTEN, ZENTRALEN FAHRZEUG UND EINEM ZWEITEN FAHRZEUG
PROCÉDÉ, SYSTÈME ET APPAREILS PERMETTANT L'ANTICIPATION D'ÉTABLISSEMENT DE RELATION DE CONFIANCE ENTRE UN PREMIER VÉHICULE MAÎTRE ET UN DEUXIÈME VEHICULE

(30) Priority: 09.03.2017 EP 17305255
(43) Date of publication of application: 15.01.2020
(73) Proprietor: Thales Dis France SA, 92190 Meudon (FR)
(72) Inventor: MAUNIER, Gérald, 92190 Meudon (FR); TRESSOL, Ludovic, 92190 Meudon (FR); DAO, Frederic, 92190 Meudon (FR); SCHMITT, Sébastien, 92190 Meudon (FR)
(74) Representative: Lotaut, Yacine Diaw
(86) International application number: PCT/EP2018/055832
(87) International publication number: WO 2018/162678

(56) References cited:
- WO-A1-2014/109033
- US-A1- 2005 163 078
- US-A1- 2011 044 264

## Description

### TECHNICAL FIELD

The present invention relates to a method for optimizing data exchanges between a first and at least one second wireless communication device. It is applicable to the Internet of things and vehicle-to-everything (V2X) technologies.

### BACKGROUND OF THE INVENTION

The international Telecommunication Union (ITU) defines the Internet of Things (loT) in the ITU-T Y.2060 recommendation as a "global infrastructure for the information society, enabling advanced services by interconnecting (physical and virtual) things based on existing and evolving interoperable information and communication technologies". The Internet of Things integrates different technologies including Machine-to-Machine (M2M) communications referring to the technologies enabling direct communications between devices. Further, M2M communications can be used in the context of vehicle-to-everything (V2X) communications, that is to say between a first wireless communication device embedded in a vehicle and a second wireless communication device implemented on another material such as a second vehicle, an infrastructure or a pedestrian.

The number of loT devices is growing fast and devices like car embedded wireless communication devices will have to manage huge volumes of data. In some scenarios like autonomous vehicles, critical decisions have to be made instantaneously based on data received from other devices. It is crucial in term of security that this information is trustable and comes from an authenticated device. To achieve these goals, the various wireless communication devices have to trust each other as soon as possible. One problem is that verifying identity and trust level of a large number of surrounding devices is time consuming. There is therefore a need to increase the speed of establishment for this trust relationship between wireless communication devices

US2005163078 A1 extends the concepts of authentication in IEEE 802.X and 802.11 i standards for improved handoff of a mobile station between access points and IP subnetworks.

### SUMMARY OF THE INVENTION

This invention relates to a method for anticipating the setup of a relation of trust between a first vehicle called central vehicle and at least a second vehicle, wherein two interaction areas are defined relatively to the position of the central vehicle, the first interaction area called exchange area comprising the central vehicle and the second interaction area called pre-authentication area being defined in a way that it has to be crossed by said second vehicle for it to enter into the exchange area, the method comprising the steps of:
- detecting if the second vehicle is localized in the pre-authentication area associated with the central vehicle;
- authenticating the central vehicle and the second vehicle if not already authenticated;
- upon successful authentication, providing the central vehicle and the second vehicle with at least one credential to set up the relation of trust for it to be already established when the second vehicle is present in the exchange area associated with the central vehicle.

According to an example, the at least one credential is a cryptographic key to be used for exchanging data securely.

According to an example, the pre-authentication area is defined as an area surrounding the exchange area.

According to an example, a first and a second cryptographic key pairs are used for exchanging data securely between the central vehicle and the second vehicle when localized in the exchange area, a cryptographic key pair comprising a private key and a public key, the private key of the first pair and the public key of the second pair being provisioned in the central vehicle, the private key of the second pair and the public key of the first pair being provisioned in the second wireless communication central vehicle.

According to an example, the private key of the first key pair is used by the central vehicle to sign data to be transmitted to the second vehicle.

According to an example, the private key of the second key pair is used by the second wireless communication device to sign data to be transmitted to the central vehicle.

According to an example, the method comprises the step of estimating the localization of the central vehicle and the localization of the second vehicle.

The invention relates to a system for optimizing the secure exchanges of data between a first vehicle called central vehicle and at least one second vehicle, the system comprising at least one server adapted to communicate wirelessly with the first and second vehicles and configured to implement the method described above.

According to an example, the system comprises a first server in charge of localizing said first and second vehicles and a second server in charge of establishing a trusted relation between the central vehicle and the at least one second vehicle by detecting in which interaction area is localized the vehicle, authenticating said first and second vehicles and if the second vehicle is localized in the pre-authentication area associated with the central vehicle, providing the central vehicle and the second vehicle with at least one cryptographic key to be used for exchanging data securely when the second vehicle is in the exchange area associated with the central vehicle.

According to an example, the at least one server is implemented into at least one of the first and second vehicle.

According to an example, the at least one server is remotely connected to the vehicles through a wireless communication network.

According to an example, the first and second vehicles are configured to estimate their position and to report it to the at least one server allowing it to determine in which interaction area associated to the central vehicle is localized the vehicle.

According to an example, at least one of the first and second vehicles is configured to determine at least one vector representative of its velocity and/or acceleration and to report it to the at least one server, the shape of the interaction area being adapted as a function of this vector.

According to an example, a second vehicle that is localized outside of the interaction areas associated to the central vehicle is nevertheless considered as localized in the pre-authentication area if its reported velocity and/or acceleration vectors show that said second vehicle moves toward said pre-authentication area and that the norm or the vector is greater that a given threshold.

The invention also relates to a first wireless communication device adapted to be embedded in a first vehicle called central vehicle, the central vehicle being associated with two interaction areas defined relatively to the position of said central vehicle, the first interaction area called exchange area comprising the central vehicle and the second interaction area called pre-authentication area being defined in a way that it has to be crossed for a second vehicle for it to enter into the exchange area, wherein the first wireless communication device is configured to communicate with at least one second wireless communication device configured to be embedded in the second vehicle and, upon successful authentication of the second vehicle when it is localized in the pre-authentication area, to receive at least one credential to set up the relation of trust for it to be already established when the second vehicle is present in the exchange area associated with the central vehicle.

According to an example, the first wireless communication device is configured to send data to the second wireless communication device in the form of a message comprising said data and a signature determined by applying at least one of the provisioned session keys to the data.

According to an example, the data and its associated signature are sent together with an identifier of the central vehicle.

According to an example, the first wireless communication device is configured to receive data from the second wireless communication device in a message associated with a digital signature and to verify the received signature using one of the provisioned session keys in order to check that the received data can be trusted.

The invention also relates to a server computer configured to implement the method as described above.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 illustrates the principle of pre-establishing a trusted relationship between a first wireless communication device embedded in a first vehicle and at least one second wireless communication device embedded in a second vehicle;
- Figure 2 provides a first example of sequence diagram illustrating an embodiment of the invention in which a trusted relation between vehicles is established by at least one remote server;
- Figure 3 provides a second example of sequence diagram illustrating an embodiment of the invention in which a trusted relation between wireless communication devices is established by themselves.
- Figure 4 is a schematic representation illustrating several improvements that can be considered in order to optimize the establishment of a trusted relation between several wireless communication devices.
- Figures 5A, 5B and 5C illustrate how the motion and environment of a vehicle embedding a wireless communication device can be taken into account in order to adapt the shape and size of its associated interaction areas.

### DETAILED DESCRIPTION

This invention is a way to optimize the treatment of high-speed data exchanges between moving devices. For that purpose, the identity of the devices are pre-processing in order to establish a trusted relationship before actual data communication happens.

According to an important aspect of the invention, a first vehicle and a second vehicle are pre-authenticated if needed and pre-provisioned with security credential such as cryptographic keys. This provisioning is anticipated such that when the two vehicles need to exchange data, a relation of trust is already established and not additional delay is required to do so.

In the following description, a wireless communication device designates a device capable or sending and receiving data on a wireless interface. It can be implemented thanks to a combination of hardware and software and support one or several wireless technologies such as Wi-Fi, Bluetooth, Universal Mobile Telecommunications System (UMTS), LTE (Long Term Evolution), Global System for Mobile Communications (GSM).

In this description, most of the tasks on the vehicle sides are depicted as being implemented by wireless communication devices adapted to be embedded in vehicles. However, the invention can also be implemented by involved other hardware and/or software entities adapted to be embedded in a vehicle and to cooperate with a wireless communication device. Therefore, a wireless communication device can be also interpreted as the vehicle itself.

According to an aspect of the invention, a wireless communication device anticipates authentication of a second wireless communication device coming in its vicinity and establishes a trusted relationship. The two wireless communication devices are then in position of exchanging data rapidly when needed.

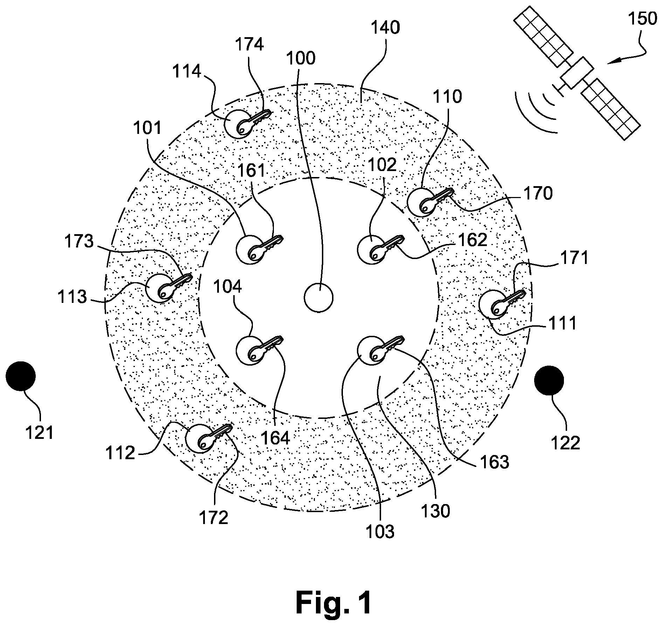

**Figure 1** illustrates the principle of pre-establishing a trusted relationship between a first wireless communication device and at least one second wireless communication device.

A first wireless communication device 100 is represented at the centre of the figure. The proposed method will carry out a set of processing stages in order to create a trusted relationship between this first wireless communication device 100 and the one or several second wireless communication devices that are likely to exchange data with it.

For that purpose, two types of interaction areas are defined. An interaction area is an area that is associated to a wireless communication device also designated as "central device". For a wireless communication device entering into an interaction area associated to a given central device, a trusted relation between them is either already established or about to be established. A trusted relation is considered as established when the two devices are authenticated and capable of exchanging data securely.

A first interaction area 130 is designated as an exchange area and is an area in which the wireless communication devices 101-104 are supposed to exchange data with the first device 100. In Figure 1, the exchange area 130 is delimited by a circle centred on the first wireless communication device 100. The skilled person will appreciate that this simple example is taken for explanatory purposes and that other configurations of the exchange area can also be considered in the scope of the proposed method. Four wireless communication devices 101-104 are located in this area.

A second interaction area 140 is called the pre-authentication area and is chosen such that it surrounds the exchange area 130. It is such that a wireless communication device which is about entering in a given exchange area has necessarily to cross its associated pre-authentication area.

According to this example, the pre-authentication area 140 corresponds to the area localized between by the circle delimiting the exchange area and a second circle of larger diameter centred on device 100. Five wireless communication devices 110-114 are located on this area.

In Figure 1, the exchange 130 and pre-authentication area 140 are defined as surfaces defined using curves such as circle. However, in a real implementation, these will likely be defined as volumes such as spheres, spheroids or cylinders.

The pre-authentication area is an area in which the wireless communication devices 110-114 are not exchanging data with the central device 100, but because of their positions, are identified as likely to exchange data with device 100 in a near future. Said differently, when a wireless communication device is localized in the pre-authentication area 140, it is identified as a candidate that is likely to enter soon in the exchange area 130 associated to the central device 100.

The wireless communication devices are localized using state-of-the-art techniques and their positions allow to determine if a given wireless communication device is in the pre-authentication area 140 or in the exchange area 130 as defined for another wireless communication device 100 of the system.

If a wireless communication device, for example device 112, is localized as entering in the pre-authentication area 140 associated to the central device, then an authentication procedure is launched with the aim of identifying if the central/first device and the devices localized in the pre-authentication area can be trusted. The authentication step can be implemented using already existing technologies.

The authentication is the process for each device to assess the identity of the other device.

The authentication step can be implemented using already existing technologies directly between the communication devices or indirectly via a trusted third party.

For example, the authentication protocols can be based on keys or certificates. The wireless communication devices can expose their certificates signed by certificate authorities, such as a device maker, a government, controlling authorities (technical control) or auto repair shop.

In case of direct authentication, each wireless communication device is able to verify the complete certification chain of the other device.

In case of indirect authentication, each wireless communication device can rely on a centralized authentication server to authenticate the other device.

According to this example, the authentication step aims first at verifying the identity of a given wireless communication device and that this wireless communication device is trusted and can be therefore allowed to communicate with other communications devices.

According to an embodiment, a verification system comprising one or several servers maintaining a list of wireless communication devices registered as trusted can be used. These servers are included or connected to a communication network allowing to perform the authentication of the wireless communication devices that are localized into the pre-authentication area.

Once authenticated, the trusted relationship between the wireless communication devices 100 and 112 can be enhanced by provisioning both devices with one or several session keys for exchanging data securely when in the exchange area 130.

According to one embodiment of the invention, for each wireless communication device 110-114 entering in the pre-authentication area 140 and correctly authenticated, at least a cryptographic key 170-174 is provided. One or several associated cryptographic keys are also provisioned in the central device 100. Then, once entering into the exchange area 130, pre-authenticated wireless communication devices 101-104 can use their cryptographic keys 161-164 to encrypt and/or to sign data exchanged with the central device 100.

According to this example, wireless communication devices 121 and 122 are outside of the pre-authentication areas 140 and therefore not authenticated. As a consequence, data exchange with the central device 100 is impossible.

In one embodiment, the wireless communication devices are able to communicate with one or several remote servers through a communication network. The communication network is for example a wireless communication network implementing technologies such as LTE (Long Term Evolution) or UMTS (Universal Mobile Telecommunications System). Other technologies can of course be considered in the context of this invention. For example, a satellite-based 150 communication network can be used for that purpose.

According to an aspect of the invention, the communication system comprises one or several servers implementing one or several functions among: locating the wireless communication devices, determining if the wireless communication devices are localized in a pre-authentication area or in an exchange area of a subsequent device and provisioning the session keys required for exchanging data securely.

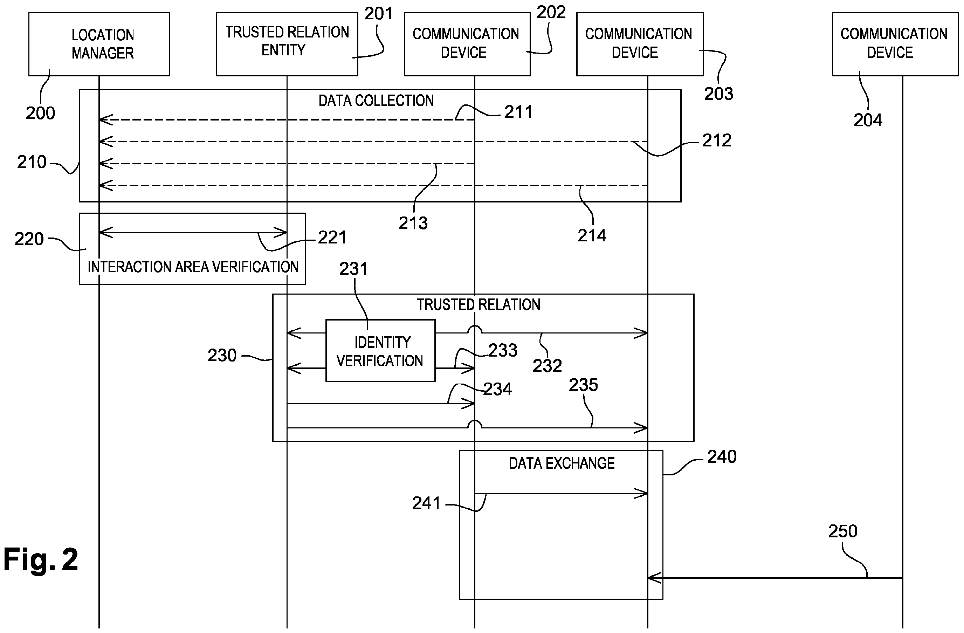

**Figure 2** provides an example of sequence diagram illustrating an embodiment of the invention in which a trusted relation between wireless communication devices is established by at least one remote server.

In this example, a first server 200 is in charge of providing location services. The location services includes for example the monitoring of routes that the devices will follow to reach a destination. A second server called trusted relation entity 201 is in charge of determining which wireless communication device is in which interaction area relatively to one or several other wireless communication devices. Three wireless communication devices 202, 203, 204 are also represented. The first and second servers can be associated to a determined geographical area such as a country, a state, a town or a district.

The first phase 210 that is represented in this sequence diagram is a data collection phase. In this example, the localisation server 200 collects data from the wireless communication devices 202 and 203. The wireless communication device 202 reports 211, 213 its coordinates periodically or based on a detected event, for example a move corresponding to a distance that is greater than a predefined value. The coordinates can be estimated using different localisation technologies, using satellite based systems such as Galileo, Global Positioning System (GPS), Glonass or other technologies such as triangulation using existing wireless networks.

The wireless communication device 203 is also reporting 212, 214 its position to the localisation server 200 in the same way.

For example, the position is reported as a set of geographic coordinates such as latitude, longitude and elevation.

In addition to the coordinates, other data can also be reported. For example, velocity and/or acceleration vectors can be calculated by the wireless communication devices and then sent to the localisation server 200. Alternatively, these vectors can be calculated by the localisation server 200 based on the coordinates that are reported by the trusted relation entity 201. This alternative has the advantage of reducing the amount of signalling transiting through the air interface. However, calculating and reporting the vectors by the devices can be more precise as more localisation estimations (i.e. estimated coordinates) can be used to derive the speed and acceleration vectors.

The second phase 220 aims at estimating which wireless communication device is in which interaction area. This can be done for each of the wireless communication devices that are belonging to the system or for a selected subset, for example for the wireless communication devices that are located on a motorway or on a national road. According to this example, the trusted relation entity 201 is in charge of these estimations. It accesses 221 to the localisation server 200 and collects the localisation data required for that purpose.

The following estimations can be carried out by the trusted relation entity 201:
- for a given wireless communication device, determine which other wireless communication devices are in the pre-authentication area;
- for a given wireless communication device, determine which other wireless communication devices are in the exchange area;
- for the wireless communication devices that are localized in a given pre-authentication areas, determine which of them are not yet authenticated.

The third phase 230 presented in the sequence diagram of figure 2 aims at setting up a trusted relationship between wireless communication devices when localized into a pre-authentication area associated with a given central device. In this example, the wireless communication device 203 is localized in the pre-authentication area associated with wireless communication device 202. As a consequence, the identity of wireless communication devices 202 and 203 is verified 231 by the trusted relation entity 201. If these identities are correctly verified, one or several session keys are respectively distributed 234, 235 to the wireless communication devices 202 and 203. At this stage, a trusted relationship is considered established between these two wireless communication devices.

The fourth phase 240 corresponds to a data exchange. At this stage, wireless communication device 203 is localized in the exchange area of wireless communication device 202. As an example, the vehicle embedding wireless communication device 202 brakes because of a danger and this is an event that is configured to be reported to all the vehicles localized into the exchange area associated to wireless communication device 202. As a consequence, a signalling message is transmitted 241 by the wireless communication device 202 to the wireless communication device 203. This message comprises for example a bit sequence carrying the information "I brake because there is a danger", an identifier of wireless communication device 202 and a signature.

According to an embodiment, the signature is calculated by applying on the aforementioned bit sequence the session key provisioned during phase 230 in wireless communication devices 202, 203. The signature is then verified by wireless communication device 203 using the session key that have also been provisioned for that purpose.

During the data exchange phase 240, the wireless communication devices are already authenticated and a trusted relation is already established. Advantageously, the messages carrying time critical information are being transmitted in a straightforward manner as soon as data is available. No additional signalling exchanges with the localisation manager 200 or with the trusted relation entity 201 is anymore required. Getting information as fast as possible is crucial for the wireless communication devices for applications such as automatic decision making. In that case, the receiver of a given message is able to take the appropriate decision. An example of decision is "as I trust the information I received, I need to brake to avoid a collision".

Data that is sent 250 by a wireless communication device 204 that has not been correctly authenticated nor provisioned with the required session keys will be ignored as the receiving wireless communication device will not be able to check the signature associated to the message.

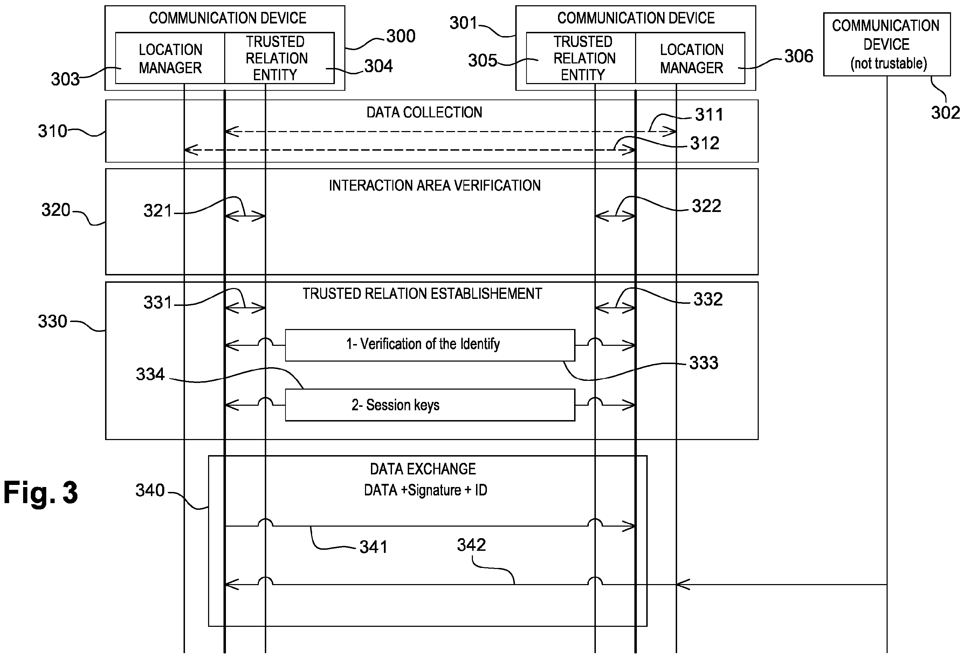

**Figure 3** provides an example of sequence diagram illustrating an embodiment of the invention in which a trusted relation between wireless communication devices is established by themselves.

In this example, three wireless communication devices 300, 301, 302 are represented. Two of them 300, 301 are capable to establish a trusted relation whereas the third one 302 is considered as non-trustable. Unlike the embodiments presented with Figure 2, the trusted relation is established without using any remote server. The functionalities of the aforementioned servers are implemented by the wireless communication devices.

The wireless communication devices are able to communicate together in order to implement different processing phases 310, 320, 330. For that purpose, a wireless communication device embeds at least two modules. The first one 303, 305 is designated as a localisation module and the second one 304, 306 as a trusted relation module and their function is respectively to localize the wireless communication devices and to establish a trusted relation between wireless communication devices when required for the purpose a data exchange. These modules can be implemented in software, in hardware or with a combination of hardware and software. Further, in this example, two modules are designated to carry out a set of functionalities. The skilled person will understand that the same set of functionalities can be carried out in a wireless communication device using a single module or any number of separate modules.

The first phase 310 depicted in the sequence diagram is a data collection phase. For example, the wireless communication device 300 estimates its position using a given technology and the coordinates are transmitted 311 to another wireless communication device 301 periodically and/or based on a specific event. This is also done similarly the other way around, that is to say that the wireless communication device 301 estimates is position using a given technology transmits 312 the estimated coordinates to the other wireless communication device 300 periodically and/or based on a specific event.

The estimated coordinates can be exchanged directly from a first wireless communication device to a second wireless communication device or using a wireless communication network, such as a UMTS or LTE network. A wireless ad-hoc network can also be used. In that case, no infrastructure is required.

The second phase 320 aims at determining by a given central device which are among the other wireless communication devices those that are located into an interaction area, and in particular which of them are in the pre-authentication area associated to said central device. For example, the trusted relation module 304 of the wireless communication device 300 estimates if the wireless communication device 301 is in its pre-authentication area thanks 321 to the coordinates collected during phase 310. In the same way, the trusted relation module 305 of the wireless communication device 301 estimates if the wireless communication device 300 is in its pre-authentication area thanks 322 to the coordinates collected during phase 310.

The third phase 330 illustrated in Figure 3 corresponds to the establishment of a trusted relation between wireless communication devices 300 and 301 which is located in the pre-authentication area associated 300. First, a mutual authentication is initiated 331, 332, 333 which the aim of verifying the identity of each wireless communication device 300, 301. This can be done autonomously by the devices or by using an external trusted server.

Then, at least a session key is shared 334 in order to be used for further data exchanges. As an example, wireless communication device 300 generates a first key pair comprising a first private key and a first public key and wireless communication device 301 generates a second key pair comprising a second private key and a second public key. Then, the first and second public keys are exchanged between the two wireless communication devices. The private keys can be used to generate the signature of a message to be transmitted from a device to another and the exchanged public keys can be used to check that the received messages have been sent by a trusted wireless communication device.

According to another aspect, the determination of the session keys can be based on elliptic curve technology and embedded certificates inside the devices.

The fourth phase 340 corresponds to a data exchange 341 between the wireless communication device 300 and the wireless communication device 301. At this stage, wireless communication device 301 is in localized in the exchange area of wireless communication device 300. A message can be transmitted by wireless communication device 301 to wireless communication device 300. This message comprises for example a bit sequence carrying the information "I brake because there is a danger", an identifier of the wireless communication device 301 and a signature. The signature is calculated by applying to the aforementioned bit sequence the session key, for example a private key securely stored by device 301. The signature is verified using the corresponding public key that has shared during phase 330. During the data exchange 340, a trusted relation is already established between devices 300 and 301. Therefore, the messages carrying time critical information can be transmitted in a straightforward manner as soon as data is available. No additional signalling exchange is required.

Data that is sent 342 by a wireless communication device 302 that has not been correctly authenticated nor provisioned with the required session keys will be ignored as the receiving wireless communication device will be unable to check the signature associated to the message.

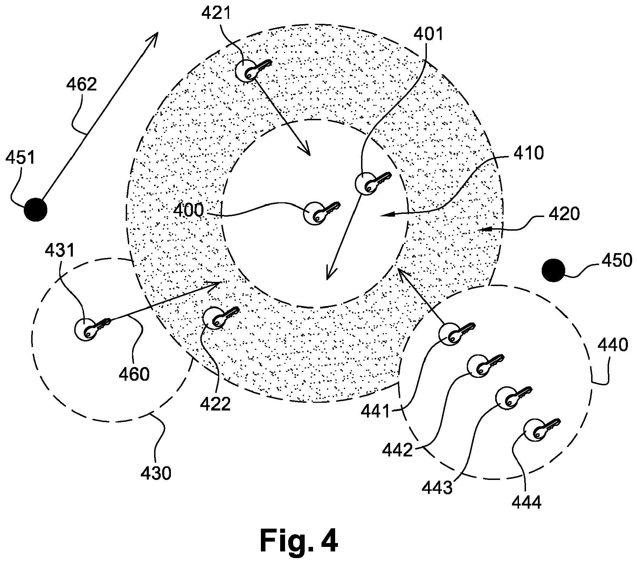

**Figure 4** is a schematic representation illustrating several improvements that can be considered in order to optimize the establishment of a trusted relation between several wireless communication devices.

A central device 400 is represented in the centre of this figure. It is associated with two interaction areas. The first interaction area is an exchange area 410 in which a wireless communication device 401 is able to exchange data with central device 400 as a trusted relation is already established between them. The second interaction area is a pre-authentication area 420. As three wireless communication devices 421, 422, 441 have been detected in this area 420, a trusted relation is established for them to exchange data rapidly with central device 410 when entering in the exchange area 410. This trusted relation implies verifying the identity of the wireless communication devices and providing them with session keys that will be later used to sign the exchanged data.

Outside of the two aforementioned interaction areas 410, 420, other wireless communication devices 431, 442, 443, 444, 450, 451 may also be present. The method can be optimized by considering one or several wireless communication devices as present in the pre-authentication area even if those are in reality outside.

According to one embodiment, a speed vector of the wireless communication devices is estimated by the system. Depending of the norm and/or direction of a given wireless communication device, it can be considered as located in the pre-authentication area 420.

As an example, wireless communication device 431 is located outside of the pre-authentication area. However, its speed vector 460 allows the system to anticipate its entrance in the pre-authentication area 420. Therefore, it can be decided to establish the trusted relation by verifying its identity and allocating a session key to this device. On the contrary, wireless communication device 450 is motionless and wireless communication device 451 is associated with a speed vector 462 which norm and direction shows that it will not enter in the pre-authentication area in a near future. Therefore, it is not required to establish a trusted relation for these two wireless communication devices 450, 451. Monitoring the norm and/or direction of the speed vector in addition to the localisation of the wireless communication devices is given as an example. Alternatives and optimizations can also be considered. For example, instead of the speed vector, the acceleration vector can be monitored. The norm and direction of the acceleration vector can also be taken into account in addition those of the speed vector.

According to another example, a set of wireless communication devices 441, 442, 443, 444 can be embedded in various vehicles belonging to a fleet of vehicles that are supposed to travel together. When a first wireless communication device 441 belonging to a fleet of vehicles is located in the pre-authentication area 420, the wireless communication devices 442, 443, 444 embedded into the other vehicles of the same fleet can also be considered as entering into the area and therefore, the trusted relation can be established for the whole fleet 440.

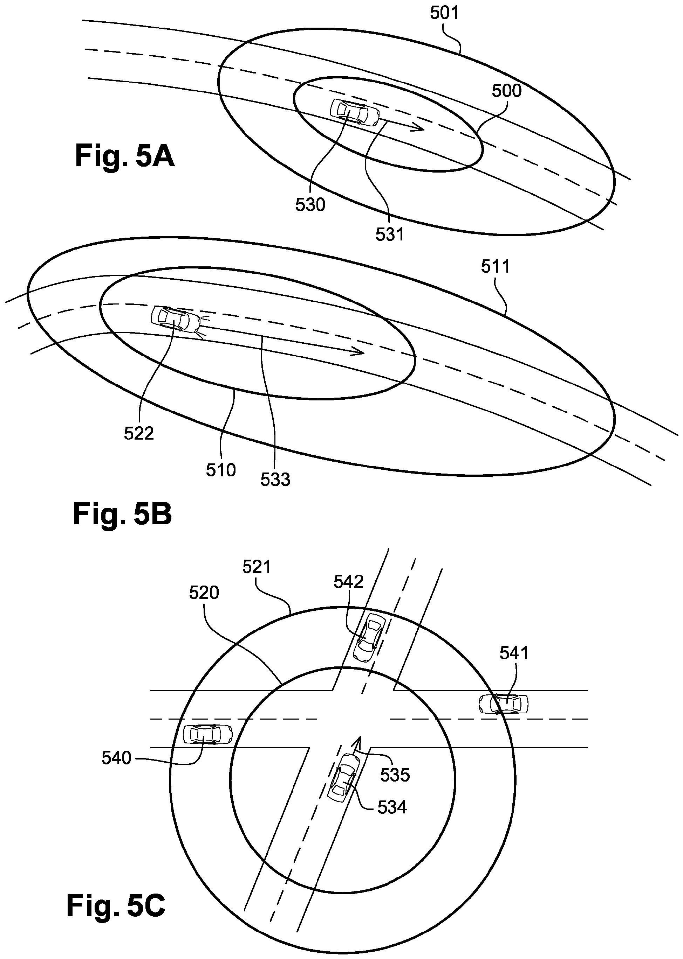

**Figures 5A, 5B and 5C** illustrate how the motion and environment of a vehicle embedding a wireless communication device can be taken into account in order to adapt the shape and size of its associated interaction areas. The size and the shape of the interaction areas as illustrated on these figures is for explanatory purpose only. The skilled person will understand that depending of the system configuration, the size of the interaction areas may be different. For example, the distance between the outline of an interaction area and its associated wireless communication area ranges from several meters towards several kilometres.

Figure 5A shows a vehicle, for example a car 530, embedding a wireless communication device with two associated interaction areas 500, 501. The first interaction area 500 is a data exchange area and is defined in this example by the volume inside of a spheroid. A spheroid is an ellipse that is rotated about its major axis. In this example, the major axis is corresponds to the direction of the speed vector associated to the wireless communication device 530. The second interaction area 501, namely the pre-authentication area, corresponds in this example to a volume obtained by subtracting the exchange area to a volume defined by a second spheroid containing the first one. According to this example, the parameters of the ellipses are chosen as a function of the norm and direction of the speed vector 531.

Figure 5B also represents a vehicle, for example a car 522, embedding a wireless communication device with two associated interaction areas 510, 511. This example corresponds to a similar situation to the one depicted with figure 5A, except that the norm of the speed vector 533 is significantly bigger than the one of the speed vector 531. The consequence is that the two spheroids used to define the two interaction areas 510, 511 are bigger. As the vehicle moves faster, it is useful to increase the size of the interaction areas. According to another aspect, if the speed is decreasing, the size of the interaction areas can be decreased accordingly.

Figure 5C represent a third situation in which a vehicle 534, for example a car, embeds a wireless communication device that is associated to two interaction areas, the first one being a data exchange area 520 and the second one 521 a pre-authentication area. As for the preceding situations, the interaction areas are defined using spheroids. According to the example the navigation context is taken into account in addition to the speed vector 535. Here, the vehicle 534 is approaching an intersection. Therefore, it can be useful to be in position of exchanging data with vehicles 540, 541 and 542. In that case, the spheroids are shaped almost like two spheres in order to embrace as many vehicles that are approaching the intersection as possible.

In another embodiment, a route determined for the wireless communication device can be used to define the shape of the interaction areas. For example, data such as the destination, the road type, the direction and the speed can be used for that purpose. The route is for example determined by the localization manager.

## Claims

1. A method for anticipating the setup of a relation of trust between a first vehicle (100) called central vehicle and at least a second vehicle, wherein two interaction areas (130, 140) are defined relatively to the position of the central vehicle (100), the first interaction area (130) called exchange area comprising the central vehicle (100) and the second interaction area (140) called pre-authentication area being defined in a way that it has to be crossed by said second vehicle for it to enter into the exchange area (130), the method comprising the steps of:
- detecting if the second vehicle is localized in the pre-authentication area (140) associated with the central vehicle (100);
- authenticating the central vehicle (100) and the second vehicle if not already authenticated;
- upon successful authentication, providing the central vehicle (100) and the second vehicle with at least one credential to set up the relation of trust for it to be already established when the second vehicle is present in the exchange area associated with the central vehicle (100).

2. A method according to claim 1, wherein the at least one credential is a cryptographic key to be used for exchanging data securely.

3. A method according to any of the preceding claims, wherein the pre-authentication area (140) is defined as an area surrounding the exchange area (130).

4. A method according to any of the preceding claims, wherein a first and a second cryptographic key pairs are used for exchanging data securely between the central vehicle (100) and the second vehicle when localized in the exchange area (130), a cryptographic key pair comprising a private key and a public key, the private key of the first pair and the public key of the second pair being provisioned in the central vehicle (100), the private key of the second pair and the public key of the first pair being provisioned in the second wireless communication central vehicle .

5. The method according to claim 4, wherein the private key of the first key pair is used by the central vehicle (100) to sign data to be transmitted to the second vehicle.

6. The method according to claim 4 or 5, wherein the private key of the second key pair is used by the second wireless communication device to sign data to be transmitted to the central vehicle (100).

7. The method according to any of the preceding claims, comprising the step of estimating the localization of the central vehicle (100) and the localization of the second vehicle.

8. A system for setup of a relation of trust between a first vehicle (100) called central vehicle and at least a second vehicle, the system comprising at least one server adapted to communicate wirelessly with the first and second vehicles and configured to implement the method according to any of the preceding claims.

9. The system according to claim 8, comprising a first server (200) in charge of localizing said first and second vehicles and a second server (201) in charge of establishing a trusted relation between the central vehicle (100) and the at least one second vehicle by detecting in which interaction area (130, 140) is localized the vehicle, authenticating said first and second vehicles and if the second vehicle is localized in the pre-authentication area (140) associated with the central vehicle (100), providing the central vehicle (100) and the second vehicle with at least one cryptographic key to be used for exchanging data securely when the second vehicle is in the exchange area associated with the central vehicle (100).

10. The system according to claim 8 or 9, wherein the at least one server is implemented (303, 304, 305, 306) into at least one of the first and second vehicle (300, 301).

11. The system according to claim 8 or 9, wherein the at least one server is remotely connected to the vehicles through a wireless communication network.

12. The system according to any of claims 8 to 11, wherein the first and second vehicles are configured to estimate their position and to report it to the at least one server allowing it to determine in which interaction area (130, 140) associated to the central vehicle (100) is localized the vehicle.

13. The system according to claim 12, wherein at least one of the first and second vehicles is configured to determine at least one vector representative of its velocity and/or acceleration and to report it to the at least one server, the shape of the interaction area being adapted as a function of this vector.

14. The system according to claim 13, wherein a second vehicle that is localized outside of the interaction areas associated to the central vehicle is nevertheless considered as localized in the pre-authentication area if its reported velocity and/or acceleration vectors show that said second vehicle moves toward said pre-authentication area and that the norm or the vector is greater that a given threshold.

15. A first wireless communication device adapted to be embedded in a first vehicle called central vehicle (100), the central vehicle being associated with two interaction areas (130, 140) defined relatively to the position of said central vehicle (100), the first interaction area (130) called exchange area comprising the central vehicle (100) and the second interaction area (140) called pre-authentication area being defined in a way that it has to be crossed for a second vehicle for it to enter into the exchange area (130), wherein the first wireless communication device is configured to communicate with at least one second wireless communication device configured to be embedded in the second vehicle and, upon successful authentication of the second vehicle when it is localized in the pre-authentication area, to receive at least one credential to set up the relation of trust for it to be already established when the second vehicle is present in the exchange area associated with the central vehicle (100).

16. The first wireless communication device (100) according to claim 15 being configured to send data to the second wireless communication device in the form of a message comprising said data and a signature determined by applying at least one of the provisioned session keys to the data.

17. The first wireless communication device (100) according to claim 16, wherein the data and its associated signature are sent together with an identifier of the central vehicle.

18. The first wireless communication device (100) according to any of claims 15 to 17, configured to receive data from the second wireless communication device in a message associated with a digital signature and to verify the received signature using one of the provisioned session keys in order to check that the received data can be trusted.

19. A server computer configured to implement the method according to any of claims 1 to 8.

## Patentansprüche

1. Verfahren zum Vorwegnehmen des Aufbaus einer Vertrauensbeziehung zwischen einem ersten Fahrzeug (100), das als zentrales Fahrzeug bezeichnet wird, und mindestens einem zweiten Fahrzeug, wobei zwei Interaktionsbereiche (130, 140) relativ zur Position des zentralen Fahrzeugs (100) definiert sind, wobei der erste Interaktionsbereich (130), der als Austauschbereich bezeichnet wird, das zentrale Fahrzeug (100) umfasst, und der zweite Interaktionsbereich (140), der als Vorauthentifizierungsbereich bezeichnet wird, in einer Weise definiert ist, dass ihn das zweite Fahrzeug durchqueren muss, um in den Austauschbereich (130) zu gelangen, wobei das Verfahren folgende Schritte umfasst:
- Erkennen, ob das zweite Fahrzeug in dem dem zentralen Fahrzeug (100) zugeordneten Vorauthentifizierungsbereich (140) lokalisiert ist;
- Authentifizieren des zentralen Fahrzeugs (100) und des zweiten Fahrzeugs, falls nicht bereits authentifiziert;
- nach erfolgreicher Authentifizierung Bereitstellen mindestens eines Berechtigungsnachweises für das zentrale Fahrzeug (100) und das zweite Fahrzeug, um die Vertrauensbeziehung für dieses aufzubauen, sodass sie bereits hergestellt ist, wenn sich das zweite Fahrzeug in dem dem zentralen Fahrzeug (100) zugeordneten Austauschbereich befindet.

2. Verfahren nach Anspruch 1, wobei der mindestens eine Berechtigungsnachweis ein kryptografischer Schlüssel ist, der zum sicheren Austauschen von Daten verwendet werden soll.

3. Verfahren nach einem der vorhergehenden Ansprüche, wobei der Vorauthentifizierungsbereich (140) als Bereich definiert ist, der den Austauschbereich (130) umgibt.

4. Verfahren nach einem der vorhergehenden Ansprüche, wobei ein erstes und ein zweites kryptografisches Schlüsselpaar zum sicheren Austauschen von Daten zwischen dem zentralen Fahrzeug (100) und dem zweiten Fahrzeug verwendet werden, wenn es im Austauschbereich (130) lokalisiert ist, wobei ein kryptografisches Schlüsselpaar einen privaten Schlüssel und einen öffentlichen Schlüssel umfasst, wobei der private Schlüssel des ersten Paares und der öffentliche Schlüssel des zweiten Paares im zentralen Fahrzeug (100) bereitgestellt werden, wobei der private Schlüssel des zweiten Paares und der öffentliche Schlüssel des ersten Paares in dem zweiten zentralen Fahrzeug mit Drahtloskommunikation bereitgestellt werden.

5. Verfahren nach Anspruch 4, wobei der private Schlüssel des ersten Schlüsselpaares von dem zentralen Fahrzeug (100) verwendet wird, um Daten zu signieren, die zum zweiten Fahrzeug übertragen werden sollen.

6. Verfahren nach Anspruch 4 oder 5, wobei der private Schlüssel des zweiten Schlüsselpaares von der zweiten Drahtloskommunikationsvorrichtung verwendet wird, um Daten zu signieren, die zu dem zentralen Fahrzeug (100) übertragen werden sollen.

7. Verfahren nach einem der vorhergehenden Ansprüche, umfassend den Schritt des Schätzens der Lokalisierung des zentralen Fahrzeugs (100) und der Lokalisierung des zweiten Fahrzeugs.

8. System zum Aufbau einer Vertrauensbeziehung zwischen einem ersten Fahrzeug (100), das als zentrales Fahrzeug bezeichnet wird, und mindestens einem zweiten Fahrzeug, wobei das System mindestens einen Server umfasst, der ausgelegt ist, um mit dem ersten und dem zweiten Fahrzeug drahtlos zu kommunizieren, und konfiguriert ist, um das Verfahren nach einem der vorhergehenden Ansprüche zu implementieren.

9. System nach Anspruch 8, umfassend einen ersten Server (200), der für das Lokalisieren des ersten und des zweiten Fahrzeugs zuständig ist, und einen zweiten Server (201), der für das Herstellen einer Vertrauensbeziehung zwischen dem zentralen Fahrzeug (100) und dem mindestens einen zweiten Fahrzeug durch Erkennen, in welchem Interaktionsbereich (130, 140) das Fahrzeug lokalisiert ist, Authentifizieren des ersten und des zweiten Fahrzeugs, und, wenn das zweite Fahrzeug in dem dem zentralen Fahrzeug (100) zugeordneten Vorauthentifizierungsbereich (140) lokalisiert ist, Bereitstellen mindestens eines kryptografischen Schlüssels für das zentrale Fahrzeug (100) und das zweite Fahrzeug, der zum sicheren Austauschen von Daten verwendet werden soll, wenn sich das zweite Fahrzeug in dem dem zentralen Fahrzeug (100) zugeordneten Austauschbereich befindet, zuständig ist.

10. System nach Anspruch 8 oder 9, wobei der mindestens eine Server in mindestens einem des ersten und des zweiten Fahrzeugs (300, 301) implementiert ist (303, 304, 305, 306).

11. System nach Anspruch 8 oder 9, wobei der mindestens eine Server über ein Drahtloskommunikationsnetzwerk mit den Fahrzeugen fernverbunden ist.

12. System nach einem der Ansprüche 8 bis 11, wobei das erste und das zweite Fahrzeug konfiguriert sind, um ihre Position zu schätzen und sie dem mindestens einen Server zu melden, um diesem zu ermöglichen zu ermitteln, in welchem dem zentralen Fahrzeug (100) zugeordneten Interaktionsbereich (130, 140) das Fahrzeug lokalisiert ist.

13. System nach Anspruch 12, wobei mindestens eines des ersten und des zweiten Fahrzeugs konfiguriert ist, um mindestens einen Vektor zu ermitteln, der für dessen Geschwindigkeit und/oder Beschleunigung repräsentativ ist, und ihn dem mindestens einen Server zu melden, wobei die Form des Interaktionsbereichs in Abhängigkeit von diesem Vektor angepasst ist.

14. System nach Anspruch 13, wobei ein zweites Fahrzeug, das außerhalb der dem zentralen Fahrzeug zugeordneten Interaktionsbereiche lokalisiert ist, dennoch als im Vorauthentifizierungsbereich lokalisiert betrachtet wird, wenn dessen gemeldeter Geschwindigkeits- und/oder Beschleunigungsvektor zeigt, dass sich das zweite Fahrzeug in Richtung des Vorauthentifizierungsbereichs bewegt und dass die Norm oder der Vektor größer als ein vorgegebener Schwellenwert ist.

15. Erste Drahtloskommunikationsvorrichtung, die ausgelegt ist, um in ein erstes Fahrzeug eingebettet zu sein, das als zentrales Fahrzeug (100) bezeichnet wird, wobei das zentrale Fahrzeug zwei Interaktionsbereichen (130, 140) zugeordnet ist, die relativ zur Position des zentralen Fahrzeugs (100) definiert sind, wobei der erste Interaktionsbereich (130), der als Austauschbereich bezeichnet wird, das zentrale Fahrzeug (100) umfasst, und der zweite Interaktionsbereich (140), der als Vorauthentifizierungsbereich bezeichnet wird, in einer Weise definiert ist, dass ihn das zweite Fahrzeug durchqueren muss, um in den Austauschbereich (130) zu gelangen, wobei die erste Drahtloskommunikationsvorrichtung konfiguriert ist, um mit mindestens einer zweiten Drahtloskommunikationsvorrichtung zu kommunizieren, die konfiguriert ist, um in das zweite Fahrzeug eingebettet zu sein, und nach erfolgreicher Authentifizierung des zweiten Fahrzeugs, wenn es im Vorauthentifizierungsbereich lokalisiert ist, mindestens einen Berechtigungsnachweis zu empfangen, um die Vertrauensbeziehung für dieses aufzubauen, sodass sie bereits hergestellt ist, wenn sich das zweite Fahrzeug in dem dem zentralen Fahrzeug (100) zugeordneten Austauschbereich befindet.

16. Erste Drahtloskommunikationsvorrichtung (100) nach Anspruch 15, die konfiguriert ist, um Daten an die zweite Drahtloskommunikationsvorrichtung in Form einer Nachricht zu senden, die die Daten und eine Signatur umfasst, die durch Anwenden mindestens eines der bereitgestellten Sitzungsschlüssel auf die Daten ermittelt wird.

17. Erste Drahtloskommunikationsvorrichtung (100) nach Anspruch 16, wobei die Daten und deren zugeordneten Signatur zusammen mit einer Kennung des zentralen Fahrzeugs gesendet werden.

18. Erste Drahtloskommunikationsvorrichtung (100) nach einem der Ansprüche 15 bis 17, die konfiguriert ist, um Daten von der zweiten Drahtloskommunikationsvorrichtung in einer Nachricht zu empfangen, die einer digitalen Signatur zugeordnet ist, und die empfangene Signatur unter Verwendung eines der bereitgestellten Sitzungsschlüssel zu verifizieren, um zu überprüfen, ob die empfangenen Daten vertrauenswürdig sind.

19. Servercomputer, der konfiguriert ist, um ein Verfahren nach einem der Ansprüche 1 bis 8 zu implementieren.

## Revendications

1. Procédé d'anticipation de l'établissement d'une relation de confiance entre un premier véhicule (100), appelé véhicule maître, et au moins un second véhicule, dans lequel deux zones d'interaction (130, 140) sont définies par rapport à la position du véhicule maître (100), la première zone d'interaction (130), appelée zone d'échange, comprenant le véhicule maître (100) et la seconde zone d'interaction (140), appelée zone de pré-authentification, étant définie de telle sorte qu'elle doive être traversée par ledit second véhicule pour qu'il entre dans la zone d'échange (130), ledit procédé comprenant les étapes suivantes :
- la détection si le second véhicule est localisé dans la zone de pré-authentification (140) associée au véhicule maître (100) ;
- l'authentification du véhicule maître (100) et du second véhicule s'il n'est pas déjà authentifié ;
- la fourniture, après l'authentification réussie, au véhicule maître (100) et au second véhicule d'au moins un justificatif d'identité pour établir la relation de confiance pour qu'elle soit déjà établie lorsque le second véhicule est présent dans la zone d'échange associée au véhicule maître (100).

2. Procédé selon la revendication 1, dans lequel l'au moins un justificatif d'identité est une clé cryptographique à utiliser pour échanger des données de manière sécurisée.

3. Procédé selon l'une quelconque des revendications précédentes, dans lequel la zone de pré-authentification (140) est définie en tant qu'une zone entourant la zone d'échange (130).

4. Procédé selon l'une quelconque des revendications précédentes, dans lequel une première et une seconde paire de clés cryptographiques sont utilisées pour échanger des données de manière sécurisée entre le véhicule maître (100) et le second véhicule lorsqu'ils sont localisés dans la zone d'échange (130), une paire de clés cryptographiques comprenant une clé privée et une clé publique, la clé privée de la première paire et la clé publique de la seconde paire étant fournies dans le véhicule maître (100), la clé privée de la seconde paire et la clé publique de la première paire étant fournies dans le second véhicule maître de communication sans fil.

5. Procédé selon la revendication 4, dans lequel la clé privée de la première paire de clés est utilisée par le véhicule maître (100) pour signer des données à transmettre au second véhicule.

6. Procédé selon la revendication 4 ou 5, dans lequel la clé privée de la seconde paire de clés est utilisée par le second dispositif de communication sans fil pour signer des données à transmettre au véhicule maître (100).

7. Procédé selon l'une quelconque des revendications précédentes, comprenant l'étape d'estimation de la localisation du véhicule maître (100) et de la localisation du second véhicule.

8. Système d'établissement d'une relation de confiance entre un premier véhicule (100), appelé véhicule maître, et au moins un second véhicule, le système comprenant au moins un serveur conçu pour communiquer sans fil avec les premier et second véhicules et configuré pour mettre en oeuvre le procédé selon l'une quelconque des revendications précédentes.

9. Système selon la revendication 8, comprenant un premier serveur (200) chargé de la localisation desdits premier et second véhicules et un second serveur (201) chargé de l'établissement d'une relation de confiance entre le véhicule maître (100) et l'au moins un second véhicule par détection de la zone d'interaction (130, 140) dans laquelle est localisée le véhicule, par authentification desdits premier et second véhicules et, si le second véhicule est localisé dans la zone de pré-authentification (140) associée au véhicule maître (100), par fourniture au véhicule maître (100) et au second véhicule d'au moins une clé cryptographique à utiliser pour échanger des données de manière sécurisée lorsque le second véhicule se trouve dans la zone d'échange associée au véhicule maître (100).

10. Système selon la revendication 8 ou 9, dans lequel l'au moins un serveur est implémenté (303, 304, 305, 306) dans le premier et/ou le second véhicule (300, 301).

11. Système selon la revendication 8 ou 9, dans lequel l'au moins un serveur est connecté à distance aux véhicules par l'intermédiaire d'un réseau de communication sans fil.

12. Système selon l'une quelconque des revendications 8 à 11, dans lequel les premier et second véhicules sont configurés pour estimer leur position et pour la signaler à l'au moins un serveur lui permettant de déterminer dans quelle zone d'interaction (130, 140) associée au véhicule maître (100) est localisé le véhicule.

13. Système selon la revendication 12, dans lequel le premier et/ou le second véhicule est configuré pour déterminer au moins un vecteur représentant sa vitesse et/ou son accélération et pour les signaler à l'au moins un serveur, la forme de la zone d'interaction étant adaptée en fonction dudit vecteur.

14. Système selon la revendication 13, dans lequel un second véhicule, lequel est localisé à l'extérieur des zones d'interaction associées au véhicule maître est néanmoins considéré comme localisé dans la zone de pré-authentification si ses vecteurs de vitesse et/ou d'accélération signalés montrent que ledit second véhicule se déplace vers ladite zone de pré-authentification et que la norme ou le vecteur est supérieur(e) à un seuil donné.

15. Premier dispositif de communication sans fil conçu pour être embarqué dans un premier véhicule, appelé véhicule maître (100), le véhicule maître étant associé à deux zones d'interaction (130, 140) définies par rapport à la position dudit véhicule maître (100), la première zone d'interaction (130), appelée zone d'échange, comprenant le véhicule maître (100) et la seconde zone d'interaction (140), appelée zone de pré-authentification, étant définie de telle sorte qu'elle doive être traversée pour qu'un second véhicule entre dans la zone d'échange (130), dans lequel le premier dispositif de communication sans fil est configuré pour communiquer avec au moins un second dispositif de communication sans fil configuré pour être embarqué dans le second véhicule et, après l'authentification réussie du second véhicule lorsqu'il est localisé dans la zone de pré-authentification, pour recevoir au moins un justificatif d'identité pour établir la relation de confiance pour qu'elle soit déjà établie lorsque le second véhicule est présent dans la zone d'échange associée au véhicule maître (100).

16. Premier dispositif de communication sans fil (100) selon la revendication 15, configuré pour envoyer des données au second dispositif de communication sans fil sous la forme d'un message comprenant lesdites données et une signature déterminée par application d'au moins une des clés de session fournies aux données.

17. Premier dispositif de communication sans fil (100) selon la revendication 16, dans lequel les données et leur signature associée sont envoyées avec un identifiant du véhicule maître.

18. Premier dispositif de communication sans fil (100) selon l'une quelconque des revendications 15 à 17, configuré pour recevoir des données du second dispositif de communication sans fil dans un message associé à une signature numérique et pour vérifier la signature reçue à l'aide de l'une des clés de session fournies pour vérifier que les données reçues sont fiables.

19. Ordinateur serveur configuré pour mettre en oeuvre le procédé selon l'une quelconque des revendications 1 à 8.
